# EUROPEAN PATENT APPLICATION

(11) **EP 4 383 399 A2**
(43) Date of publication of application: **12.06.2024**
(21) Application number: 23214029.3
(22) Date of filing: 04.12.2023
(51) Int. Cl.: H01M 10/0587, H01M 50/103, H01M 50/186, H01M 50/342

(54) **SECONDARY BATTERY**

(30) Priority: 09.12.2022 KR 20220171582
(71) Applicant: Samsung SDI Co., Ltd., Yongin-si, Gyeonggi-do 17084 (KR)
(72) Inventor: Byun, Sang Won, 17084 Yongin-si, Gyeonggi-do (KR); Hyun, Jang Suk, 17084 Yongin-si, Gyeonggi-do (KR); Yu, A Rum, 17084 Yongin-si, Gyeonggi-do (KR); Jung, Hyun Ki, 17084 Yongin-si, Gyeonggi-do (KR)
(74) Representative: Gulde & Partner

(57) **Abstract**

The present disclosure relates to a secondary battery. The secondary battery includes a first case having a hexahedral shape, a second case having a hexahedral shape, and coupled to the first case, an electrode assembly in the first case and the second case, a pair of current collector plates electrically connected to the electrode assembly, and electrically connected to the first case and the second case, respectively, and a sealing member including an insulating material between the first case and the second case.

## Description

### BACKGROUND

### 1. Field

Embodiments of the present disclosure relate to a secondary battery having two polarities without a terminal.

### 2. Description of the Related Art

Secondary battery are batteries that are chargeable and dischargeable, unlike primary batteries, which are not chargeable. A secondary battery may be formed by embedding an electrode assembly stacked or wound with a separator interposed between a positive electrode plate and a negative electrode plate and an electrolyte in a case, and installing a cap assembly to the case. In the electrode assembly, a substrate tab may protrude in a lateral or upward direction, and a current collection structure may be connected to the substrate tab. The current collection structure is electrically connected to a negative electrode terminal and to a positive electrode terminal formed in the cap assembly. The negative electrode terminal and the positive electrode terminal may be electrically connected to the outside of the secondary battery through a bus bar.

The above-described general secondary battery may suitably use numerous parts to electrically connect the negative and positive electrode terminals to the electrode assembly, and thus a structure thereof may be relatively complicated. Accordingly, it may be relatively difficult to secure a space capable of increasing the capacity of a secondary battery. In addition, if a battery pack is manufactured with a plurality of secondary batteries, because a plurality of bus bars shroud be connected to each terminal, an internal structure of the battery pack is inevitably complicated.

The above information disclosed in this background section is only for enhancement of understanding of the background of the disclosure, and therefore may contain information that does not constitute the related art.

### SUMMARY

The present disclosure is directed to providing a secondary battery having two polarities without a terminal and respective bus bars.

A secondary battery according to one or more embodiments of the present disclosure includes a first case having a hexahedral shape, a second case having a hexahedral shape, and coupled to the first case, an electrode assembly in the first case and the second case, a pair of current collector plates electrically connected to the electrode assembly, and electrically connected to the first case and the second case, respectively, and a sealing member including an insulating material between the first case and the second case.

One of the first case and the second case may be larger than the other, and may be coupled thereto to overlap a portion thereof.

The sealing member may have a ring shape surrounding a portion where the first case and the second case overlap.

The one of the first case and the second case may include a vent region adjacent to a portion where the other overlaps.

The electrode assembly may have a hexahedral shape, wherein the pair of current collector plates are respectively at end portions of the electrode assembly in a length direction or in a direction perpendicular to the length direction.

The vent region may be in a short side portion or in a long side portion of the one of the first case and the second case.

The vent region may have a thickness that is less than a thickness of the short side portion or the long side portion.

The secondary battery may further include a vent at a vent hole that is defined in the one of the first case and the second case.

The electrode assembly may have a hexahedral shape, wherein the pair of current collector plates are respectively at end portions of the electrode assembly in a length direction or in a direction perpendicular to the length direction.

One of the pair of current collector plates may be adjacent to a long side portion or a short side portion of the first case or the second case away from the vent.

The pair of current collector plates may have a plate shape, and may include a bent portion that is bent toward the long side portion or the short side portion adjacent thereto, respectively.

The sealing member may have a width that is greater than a width of a portion where the first case and the second case overlap.

The sealing member may include a sealing gasket.

The first case may include a positive electrode case having a positive polarity, wherein the second case includes a negative electrode case having a negative polarity.

A negative electrode plate may be at an outermost side of the electrode assembly to face the first case and the second case.

The electrode assembly may include a positive electrode plate facing the first case, and a negative electrode plate facing the second case.

A surface of the positive electrode plate that faces the first case might not be coated with an active material.

The first case may include a positive electrode case having a positive polarity, wherein the second case includes a negative electrode case having a negative polarity, wherein the bent portion of one of the pair of current collector plates at a positive electrode side electrically connected to a positive electrode plate of the electrode assembly contacts the first case, and wherein the bent portion of another of the pair of current collector plates at a negative electrode side electrically connected to a negative electrode plate of the electrode assembly contacts the second case.

The secondary battery may further include an insulator including an insulating material between the first case and the current collector plate, and between the second case and the current collector plate.

### BRIEF DESCRIPTION OF DRAWINGS

FIG. 1 is a perspective view illustrating a secondary battery according to one or more embodiments of the present disclosure.
FIG. 2 is an exploded perspective view of the secondary battery of FIG. 1.
FIG. 3 is a side cross-sectional view of the secondary battery of FIG. 1.
FIG. 4a is a perspective view illustrating a vent according to one or more embodiments of the present disclosure.
FIG. 4b is a partial cross-sectional view of the vent according to FIG. 4a.
FIG. 5a is a perspective view illustrating a vent according to one or more other embodiments of the present disclosure.
FIG. 5b is a partial cross-sectional view of the vent according to FIG. 5a.
FIGS. 6a and 6b are schematic views briefly illustrating a structure of an electrode assembly of a secondary battery according to embodiments of the present disclosure.
FIG. 7 is a schematic view illustrating a comparison between internal spaces of a secondary battery according to embodiments of the present disclosure and a secondary battery according to a comparative example.

### DETAILED DESCRIPTION

Aspects of some embodiments of the present disclosure and methods of accomplishing the same may be understood more readily by reference to the detailed description of embodiments and the accompanying drawings. The described embodiments are provided as examples so that this disclosure will be thorough and complete, and will fully convey the aspects of the present disclosure to those skilled in the art. Accordingly, processes, elements, and techniques that are redundant, that are unrelated or irrelevant to the description of the embodiments, or that are not necessary to those having ordinary skill in the art for a complete understanding of the aspects of the present disclosure may be omitted. Unless otherwise noted, like reference numerals, characters, or combinations thereof denote like elements throughout the attached drawings and the written description, and thus, repeated descriptions thereof may be omitted.

The described embodiments may have various modifications and may be embodied in different forms, and should not be construed as being limited to only the illustrated embodiments herein. The present disclosure covers all modifications, equivalents, and replacements within the idea and technical scope of the present disclosure. Further, each of the features of the various embodiments of the present disclosure may be combined or combined with each other, in part or in whole, and technically various interlocking and driving are possible. Each embodiment may be implemented independently of each other or may be implemented together in an association.

In the drawings, the relative sizes of elements, layers, and regions may be exaggerated for clarity and/or descriptive purposes. Additionally, the use of cross-hatching and/or shading in the accompanying drawings is generally provided to clarify boundaries between adjacent elements. As such, neither the presence nor the absence of cross-hatching or shading conveys or indicates any preference or requirement for particular materials, material properties, dimensions, proportions, commonalities between illustrated elements, and/or any other characteristic, attribute, property, etc., of the elements, unless specified.

Various embodiments are described herein with reference to sectional illustrations that are schematic illustrations of embodiments and/or intermediate structures. As such, variations from the shapes of the illustrations as a result, for example, of manufacturing techniques and/or tolerances, are to be expected. Further, specific structural or functional descriptions disclosed herein are merely illustrative for the purpose of describing embodiments according to the concept of the present disclosure. Thus, embodiments disclosed herein should not be construed as limited to the illustrated shapes of elements, layers, or regions, but are to include deviations in shapes that result from, for instance, manufacturing.

Spatially relative terms, such as "beneath," "below," "lower," "lower side," "under," "above," "upper," "upper side," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, if the device in the figures is turned over, elements or features described as "below," "beneath," "or "under" other elements or features would then be oriented "above" the other elements or features. Thus, the example terms "below" and "under" can encompass both an orientation of above and below. The device may be otherwise oriented (e.g., rotated 90 degrees or at other orientations) and the spatially relative descriptors used herein should be interpreted accordingly. Similarly, when a first part is described as being arranged "on" a second part, this indicates that the first part is arranged at an upper side or a lower side of the second part without the limitation to the upper side thereof on the basis of the gravity direction.

Further, the phrase "in a schematic cross-sectional view" means when a schematic cross-section taken by vertically cutting an object portion is viewed from the side. The terms "overlap" or "overlapped" mean that a first object may be above or below or to a side of a second object, and vice versa. Additionally, the term "overlap" may include layer, stack, face or facing, extending over, covering, or partly covering or any other suitable term as would be appreciated and understood by those of ordinary skill in the art. The expression "not overlap" may include meaning, such as "apart from" or "set aside from" or "offset from" and any other suitable equivalents as would be appreciated and understood by those of ordinary skill in the art. The terms "face" and "facing" may mean that a first object may directly or indirectly oppose a second object. In a case in which a third object intervenes between a first and second object, the first and second objects may be understood as being indirectly opposed to one another, although still facing each other.

It will be understood that when an element, layer, region, or component is referred to as being "formed on," "on," "connected to," or "(operatively or communicatively) coupled to" another element, layer, region, or component, it can be directly formed on, on, connected to, or coupled to the other element, layer, region, or component, or indirectly formed on, on, connected to, or coupled to the other element, layer, region, or component such that one or more intervening elements, layers, regions, or components may be present. In addition, this may collectively mean a direct or indirect coupling or connection and an integral or non-integral coupling or connection. For example, when a layer, region, or component is referred to as being "electrically connected" or "electrically coupled" to another layer, region, or component, it can be directly electrically connected or coupled to the other layer, region, and/or component or intervening layers, regions, or components may be present. However, "directly connected/directly coupled," or "directly on," refers to one component directly connecting or coupling another component, or being on another component, without an intermediate component. In addition, in the present specification, when a portion of a layer, a film, an area, a plate, or the like is formed on another portion, a forming direction is not limited to an upper direction but includes forming the portion on a side surface or in a lower direction. On the contrary, when a portion of a layer, a film, an area, a plate, or the like is formed "under" another portion, this includes not only a case where the portion is "directly beneath" another portion but also a case where there is further another portion between the portion and another portion. Meanwhile, other expressions describing relationships between components, such as "between," "immediately between" or "adjacent to" and "directly adjacent to" may be construed similarly. In addition, it will also be understood that when an element or layer is referred to as being "between" two elements or layers, it can be the only element or layer between the two elements or layers, or one or more intervening elements or layers may also be present.

For the purposes of this disclosure, expressions, such as "at least one of," or "any one of," or "one or more of" when preceding a list of elements, modify the entire list of elements and do not modify the individual elements of the list. For example, "at least one of X, Y, and Z," and "at least one selected from the group consisting of X, Y, and Z," may be construed as X only, Y only, Z only, any combination of two or more of X, Y, and Z, such as, for instance, XYZ, XYY, YZ, and ZZ, or any variation thereof. Similarly, the expression, such as "at least one of A and B" may include A, B, or A and B. As used herein, "or" generally means "and/or," and the term "and/or" includes any and all combinations of one or more of the associated listed items. For example, the expression, such as "A and/or B" may include A, B, or A and B. Similarly, expressions, such as "at least one of," "a plurality of," "one of," and other prepositional phrases, when preceding a list of elements, modify the entire list of elements and do not modify the individual elements of the list.

It will be understood that, although the terms "first," "second," "third," etc., may be used herein to describe various elements, components, regions, layers and/or sections, these elements, components, regions, layers and/or sections should not be limited by these terms. These terms do not correspond to a particular order, position, or superiority, and are used only used to distinguish one element, member, component, region, area, layer, section, or portion from another element, member, component, region, area, layer, section, or portion. Thus, a first element, component, region, layer or section described below could be termed a second element, component, region, layer or section, without departing from the spirit and scope of the present disclosure. The description of an element as a "first" element may not require or imply the presence of a second element or other elements. The terms "first," "second," etc. may also be used herein to differentiate different categories or sets of elements. For conciseness, the terms "first," "second," etc. may represent "first-category (or first-set)," "second-category (or second-set)," etc., respectively.

The terminology used herein is for the purpose of describing particular embodiments only and is not intended to be limiting of the present disclosure. As used herein, the singular forms "a" and "an" are intended to include the plural forms as well, while the plural forms are also intended to include the singular forms, unless the context clearly indicates otherwise. It will be further understood that the terms "comprises," "comprising," "have," "having," "includes," and "including," when used in this specification, specify the presence of the stated features, integers, steps, operations, elements, and/or components, but do not preclude the presence or addition of one or more other features, integers, steps, operations, elements, components, and/or groups thereof.

When one or more embodiments may be implemented differently, a specific process order may be performed differently from the described order. For example, two consecutively described processes may be performed substantially at the same time or performed in an order opposite to the described order.

As used herein, the term "substantially," "about," "approximately," and similar terms are used as terms of approximation and not as terms of degree, and are intended to account for the inherent deviations in measured or calculated values that would be recognized by those of ordinary skill in the art. "About" or "approximately," as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, 5% of the stated value. Further, the use of "may" when describing embodiments of the present disclosure refers to "one or more embodiments of the present disclosure."

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

Hereinafter, a secondary battery according to one or more embodiments of the present disclosure will be described in detail with reference to the accompanying drawings.

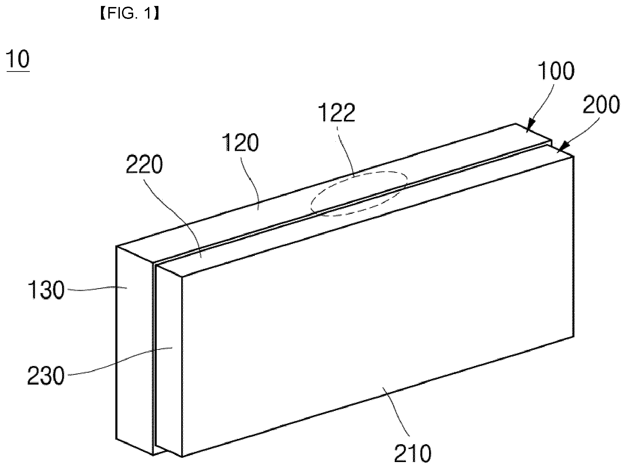

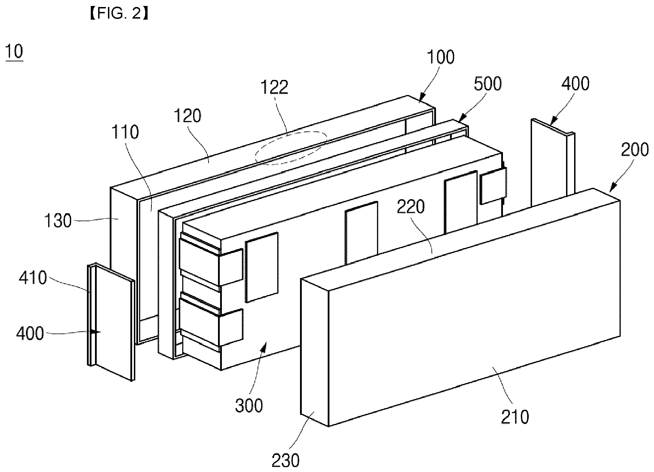

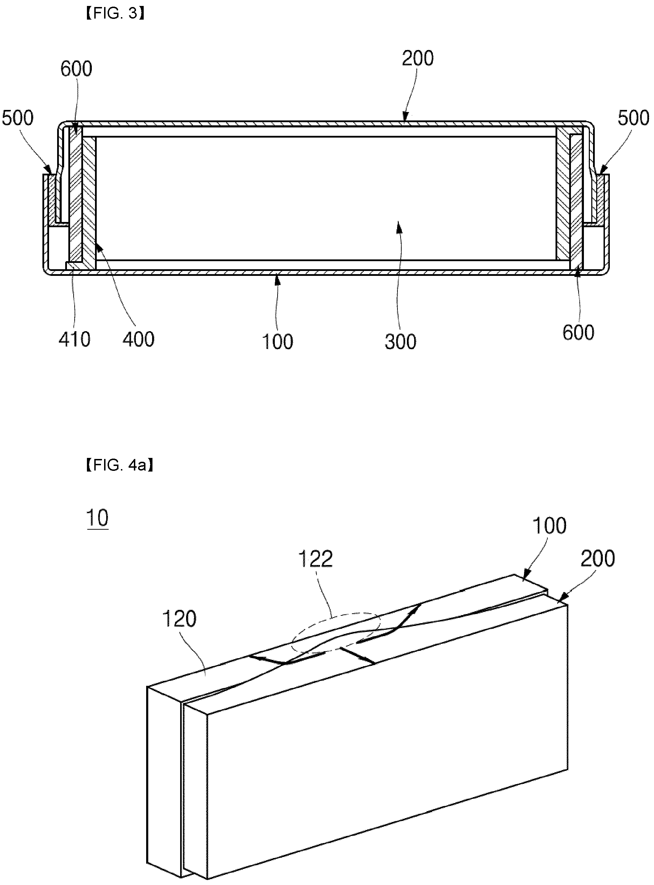

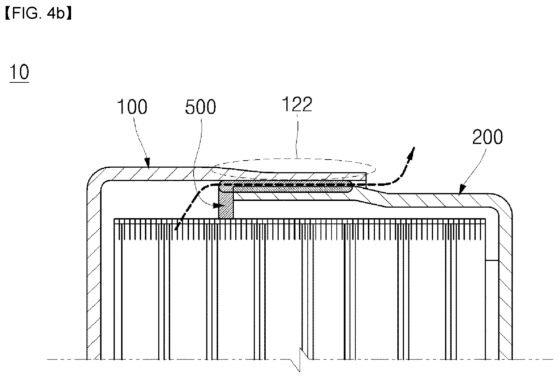

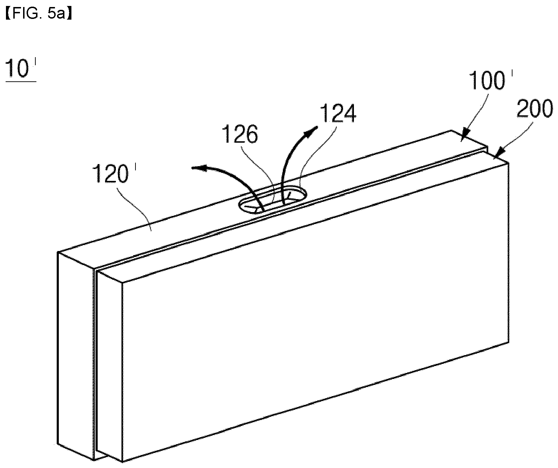

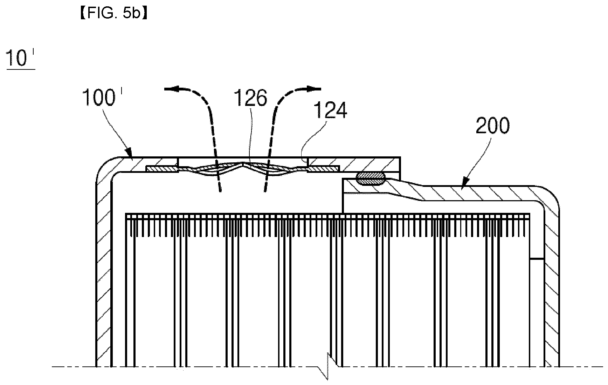

FIG. 1 is a perspective view illustrating a secondary battery according to one or more embodiments of the present disclosure. FIG. 2 is an exploded perspective view of the secondary battery of FIG. 1. FIG. 3 is a side cross-sectional view of the secondary battery of FIG. 1. FIG. 4a is a perspective view illustrating a vent according to one or more embodiments of the present disclosure. FIG. 4b is a partial cross-sectional view of the vent of FG. 4a. FIG. 5a is a perspective view illustrating a vent according to one or more other embodiments of the present disclosure. FIG. 5b is a partial cross-sectional view of the vent according to FIG. 5a.

As shown in FIGS. 1 to 3, a secondary battery 10 according to one or more embodiments of the present disclosure may include cases 100 and 200 each having a prismatic shape, an electrode assembly 300 accommodated in the cases 100 and 200, a current collector plate 400 for connecting the electrode assembly to the case, and a sealing member 500 for sealing. That is, the secondary battery 10 is a type without a terminal structure and a cap plate exposed to the outside.

As shown in FIGS. 1 to 3, the cases 100 and 200 may include a first case 100 and a second case 200. The first case 100 and the second case 200 may have a rectangular parallelepiped shape with one side that is open. That is, the first case 100 and the second case 200 may have shapes obtained by cutting a rectangular parallelepiped case in half. In this case, for sealing, one of the first case 100 and the second case 200 may be provided to have a smaller size than that of the other one. An example in which the first case 100 is larger than the second case 200 will be described. A method of coupling the first case 100 and the second case 200 will be described below.

For example, the first case 100 may be made of an aluminum material to comprise or be a positive electrode case, and the second case 200 may be made of steel or nickel-plated steel material to comprise or be a negative electrode case. In one or more embodiments, the first case 100 may be a negative electrode case, and the second case 200 may be a positive electrode case. Descriptions will be made based on the first case 100 being a positive electrode case.

The first case 100 may include a plate portion 110, which is a surface opposite to an open portion, and which has a rectangular shape and a relatively large area, and long side portions 120 and short side portions 130 respectively located at an upper side, a lower side, a left side, and a right side of the plate portion 110. Among surfaces, both end surfaces parallel to a length direction of the first case 100 are defined as the long side portions 120, and both end surfaces perpendicular to the length direction are defined as the short side portions 130. The plate portion 110 is located to face a plate surface of the electrode assembly 300 which has the widest area. A vent structure to be described below may be provided at the long side portion 120. One of the short side portions 130 may be electrically connected to the current collector plate 400 to be described below. However, in one or more embodiments, one of the long side portions 120 may be electrically connected to the current collector plate 400, and the vent structure may be provided at the short side portion 130.

The second case 200 may have the same structure as that of the first case 100, and may be located at a position facing the first case 100. The electrode assembly 300, the current collector plate 400, and the sealing member 500 are accommodated between the first case 100 and the second case 200. The second case 200 may also include a plate portion 210 having a rectangular shape, and long side portions 220 and short side portions 230 respectively located at an upper side, a lower side, a left side, and a right side of the plate portion 210. Among surfaces, both end surfaces parallel to a length direction of the second case 200 are defined as the long side portions 220, and both end surfaces perpendicular to the length direction are defined as the short side portions 230. The plate portion 210 is located to face a plate surface of the electrode assembly 300 that has the widest area. A vent structure to be described below may be provided at the long side portion 220. One of the short side portions 230 may be electrically connected to the current collector plate 400 to be described below. However, in one or more embodiments, one of the long side portions 220 may be electrically connected to the current collector plate 400, and the vent structure may be provided at the short side portion 230.

As shown in FIGS. 4a and 4b, a vent region 122 functioning as a vent may be provided in one of the long side portions 120 of the first case 100. For example, if the first case 100 is a positive electrode case, the vent region 122 may be provided in the first case 100 because the first case 100 may be easier to deform than the second case 200 if gas is discharged by internal pressure.

A region (e.g., preset region) of the long side portion 120 may be thinner than surrounding regions so as to be fractured by internal pressure if gas is discharged, thereby forming the vent region 122. The vent region 122 may have a corresponding thickness that can be deformed by a pressure that is less than, or weaker than, a coupling force between the first case 100 and the second case 200 coupled through welding. For example, the thickness of the vent region 122 may be 1/3 to 1/2 of a thickness of the long side portion 120, but this is merely an example, and the present disclosure is not limited thereto. Accordingly, before the weld of the first case 100 and the second case 200 is fractured, the vent region 122 may be deformed by internal pressure so that gas may be discharged.

In one or more embodiments, as shown in FIGS. 5a and 5b, a vent hole 124 may be provided in one of long side portions 120' of a first case 100' of the secondary battery 10', and a vent 126 may be coupled thereto or therein. In this case, because the first case 100' is provided to be larger than a second case 200, the vent 126 may be provided to avoid a portion coupled to the second case 200 (e.g., a region overlapping the second case 200). Accordingly, if the vent 126 is fractured, gas may move between an electrode assembly 300 and the vent 126 to be discharged through a fractured portion of the vent 126. One of the pair of current collector plates 400 may be adjacent to a long side portion 120' of the first case 100' away from the vent 126.

Hereinafter, components other than the case will be described with reference to FIGS. 2 and 3 again.

As shown in FIG. 2, the electrode assembly 300 may be provided by winding a unit stack that includes a first electrode plate and a second electrode plate, which are in the form of a thin plate or film, and a separator interposed therebetween, or by stacking a plurality of unit stacks. When the electrode assembly 300 is wound and provided, a winding axis may be arranged in a horizontal direction or in a vertical direction approximately parallel to a length direction of the cases 100 and 200. When the electrode assembly 300 is stacked and provided, wide plate surfaces of the plurality of unit stacks may be adjacent to each other. The components are shown in the drawings based on the electrode assembly 300 in the form of a stack. The electrode assembly 300 may have a hexahedral shape.

For example, the first electrode plate may serve as a negative electrode plate, and the second electrode plate may serve as a positive electrode plate. In one or more embodiments, the reverse is also possible.

When the first electrode plate is a negative electrode plate, the first electrode plate may be provided by applying a first electrode active material, such as graphite or carbon, on a first electrode current collector provided as a metal foil made of copper, a copper alloy, nickel, or a nickel alloy. A first substrate tab (or a first uncoated portion), which is a region on which the first electrode active material is not applied, may be provided on the first electrode plate. After a plurality of first substrate tabs are gathered and tack-welded, the tack-welded first substrate tabs and the current collector plate 400 may be electrically connected. That is, the first substrate tab may serve as a path for current flow between the first electrode plate and the current collector plate 400. For example, the first substrate tab may be located at one end portion of the electrode assembly 300 in a length direction.

When the second electrode plate is a positive electrode plate, the second electrode plate may be provided by applying a second electrode active material, such as a transition metal oxide, on a second electrode current collector provided as a metal foil made of aluminum or an aluminum alloy. A second substrate tab (or a second uncoated portion), which is a region on which the second electrode active material is not applied, may be provided on the second electrode plate. After a plurality of second substrate tabs are gathered and tack-welded, the tack-welded second substrate tabs and the current collector plate 400 may be electrically connected. That is, the second substrate tab may serve as a path for current flow between the second electrode plate and the current collector plate 400. For example, the second substrate tab may be located at one end portion of the electrode assembly 300 in the length direction.

The separator may be located between the first electrode plate and the second electrode plate to reduce or prevent the likelihood of a short circuit, and to enable movement of lithium ions. For example, the separator may include polyethylene, polypropylene, or a composite film of polyethylene and polypropylene. In some examples, the separator may be replaced with an inorganic-based solid electrolyte, such as a sulfide-based, oxide-based, or phosphate compound-based solid electrolyte that does not require a liquid or gel electrolyte.

The electrode assembly 300 may be accommodated in the cases 100 and 200 together with an electrolyte. In some examples, the electrolyte may include a lithium salt, such as LiPF₆ or LiBF₄, in an organic solvent, such as ethylene carbonate (EC), propylene carbonate (PC), diethyl carbonate (DEC), ethyl methyl carbonate (EMC), or dimethyl carbonate (DMC). In one or more embodiments, the electrolyte may be in a liquid state or in gel state. In some examples, if an inorganic-based solid electrolyte is used, the liquid or gel electrolyte may be omitted.

In one or more embodiments, a pair of current collector plates 400 may be respectively at end portions of the electrode assembly 300 in the length direction or in a direction perpendicular to the length direction. As shown in FIGS. 2 and 3, a pair of current collector plates 400 may be provided, and may be electrically connected to the first substrate tab and the second substrate tab through welding or the like. For example, the current collector plate 400 may have a plate shape having a size substantially corresponding to a cross-sectional area of both ends of the electrode assembly 300 in the length direction. In one or more embodiments, one end portion of the current collector plate 400 may be vertically bent along a vertical direction of the electrode assembly 300 in FIG. 2, for example, bent toward the short side portion 130 adjacent thereto. A bending direction of the bent end portion may be a direction toward the case 100 or 200. The pair of current collector plates 400 may both have the same shape, and as shown in FIG. 3, bending directions of the bent end portions may be opposite directions. The bent end portion of the current collector plate 400 is defined as a bent portion 410.

An insulator 600 having a plate shape may be additionally inserted between the current collector plate 400 and the short side portion of each of the cases 100 and 200. A pair of insulators 600 may be provided, and one side thereof may be in close contact with the bent portion 410, and the other side thereof may be in close contact with each of the cases 100 and 200. One insulator 600 allows the current collector plate 400, for example, the bent portion 410 thereof, at a positive electrode side connected to a positive electrode plate to be in close contact with the first case 100. In one or more embodiments, the other insulator 600 allows the current collector plate 400, for example, the bent portion 410 thereof, at a negative electrode side connected to a negative electrode plate to be in close contact with the second case 200.

Accordingly, the cases 100 and 200 may be in contact with only the bent portions 410 of the current collector plates 400 to be electrically connected. The current collector plate 400 welded to the first substrate tab may be made of the same material as that of the first substrate tab. The current collector plate 400 welded to the second substrate tab may be made of the same material as that of the second substrate tab. The current collector plates 400 may be electrically connected to the cases 100 and 200 through laser welding or the like. Because two cases are provided, the bent portions 410 of the pair of current collector plates 400 are located in opposite directions. Accordingly, the bent portion 410 of one current collector plate 400 is electrically connected to the first case 100, and the bent portion 410 of the other current collector plate 400 is electrically connected to the second case 200. Accordingly, because the first case 100 and the second case 200 are electrically connected to the electrode assembly 300 by the current collector plates 400, current paths may be provided from the electrode assembly 300 to the cases 100 and 200. That is, because the first case 100 and the second case 200 have a positive polarity and a negative polarity, respectively, current paths can be provided without additional components, such as separate terminals and bus bars.

As shown in FIGS. 2 and 3, the sealing member 500 may have a quadrangular band shape having a width. For example, the sealing member 500 may comprise or be a sealing gasket made of an insulating material. The sealing member 500 may surround (e.g., may have a ring shape, or may partially surround) the short side portion 230 and the long side portion 220 of the second case 200. Therefore, the sealing member 500 may be located between the first case 100 and the second case 200. In this case, the width of the sealing member 500 is greater than a width of a portion where the first case 100 and the second case 200 overlap. This may reduce or prevent the likelihood of a short circuit occurring due to mutual contact if the first case 100 and the second case 200 are coupled. In that light a surrounding sealing member 500 provides seamless protection against short circuits.

The cases 100 and 200 may be sealed through an electromagnetic pulse welding method in which electromagnetic pulses are applied from the outside of the cases 100 and 200 to press the sealing member 500, and to concurrently or substantially simultaneously weld the sealing member 500 to the cases 100 and 200 in a state in which the electrode assembly 300 is accommodated in the cases 100 and 200. In one or more embodiments, the sealing member 500 and the cases 100 and 200 may be fused through a thermal fusion method. That is, the first case 100 and the second case 200 made of different materials may be coupled to each other and sealed at the same time by the sealing member 500. In this case, the sealing member 500 may be made of an insulating material having appropriate rigidity such that the first case 100 and the second case 200 do not come into contact with each other due to the pressing of the sealing member 500.

As described above, because two cases are each electrically connected to one of a pair of current collector plates electrically connected to an electrode assembly, the cases themselves become a negative electrode and a positive electrode. Therefore, a secondary battery having a simple structure can be manufactured without a separate terminal structure, thereby reducing material and processing costs of cells and modules.

Hereinafter, additional functions and effects according to a structure of a secondary battery according to the above-described embodiments will be described.

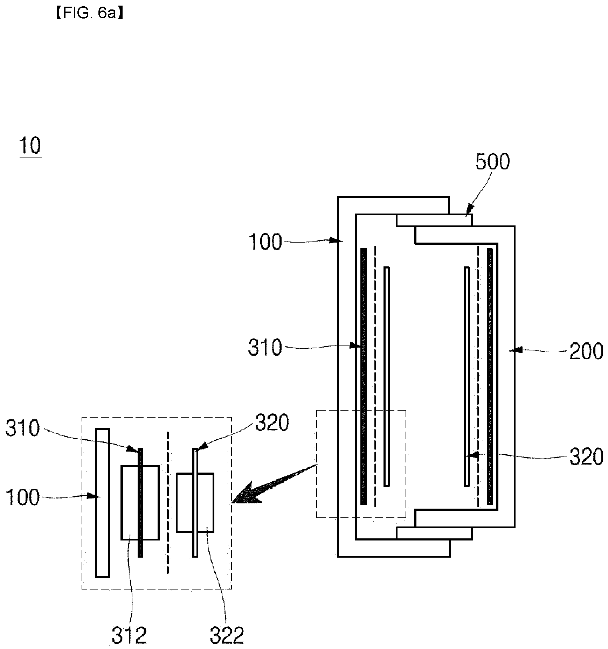

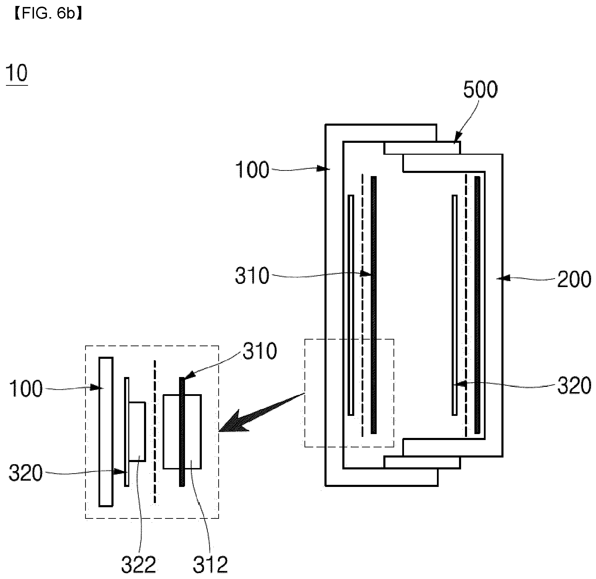

FIGS. 6a and 6b are schematic views briefly illustrating a structure of an electrode assembly of a secondary battery according to embodiments of the present disclosure.

In general, an electrode plate of an electrode assembly has a form in which both surfaces are coated with an active material. In one or more embodiments, because the electrode assembly is a stack type, a pair of negative electrode plates may be located at the outermost side of the electrode assembly, and thus, a short circuit may occur on both surfaces if a metallic foreign material penetrates both surfaces in contact with a case which is a positive electrode. However, because the cases 100 and 200 include the first case 100 as a positive electrode case and the second case 200 as a negative electrode case, only one electrode plate having one polarity is in contact with one case 100 or 200. Therefore, a rate of occurrence of short circuits is reduced as compared with a case in which a general electrode assembly and case are provided.

More detailed descriptions will be made based on the first case 100, which is a positive electrode case.

As shown in FIG. 6a, like a general electrode plate, a negative electrode plate 310, of which both surfaces are coated with a negative active material 312, may be located at the outermost side of an electrode assembly 300 to face the first case 100 and the second case 200 and used. Because a lithium-ion capacity of a positive electrode plate 320 is greater than a storage capacity of the negative electrode plate 310, a short circuit may occur if lithium ions are precipitated between the negative electrode plate 310 and the first case 100, which is a positive electrode case. However, because the second case 200 is a negative electrode case, even if lithium ions are precipitated, a short circuit with the negative electrode plate 310 having the same polarity as that of the second case 200 does not occur. Therefore, because there is a probability of a short circuit only on one surface of a case instead of both surfaces, a short circuit occurrence rate can be reduced as compared with the structure of the above-described general secondary battery.

In one or more embodiments, as shown in FIG. 6b, the positive electrode plate 320, of which only one side is coated with a positive electrode active material 322, may be located to face the first case 100, which is a positive electrode case. In this case, in the second case 200, which is a negative electrode case, an electrode plate may be located to be in contact with the negative electrode plate 310. In this case, because only one side of the positive electrode plate 320 is coated with the positive electrode active material 322, an amount of lithium ions is reduced, and thus there is no precipitation problem, so that a short circuit does not occur between the first case 100 and the positive electrode plate 320. Accordingly, the stability of a secondary battery can be improved.

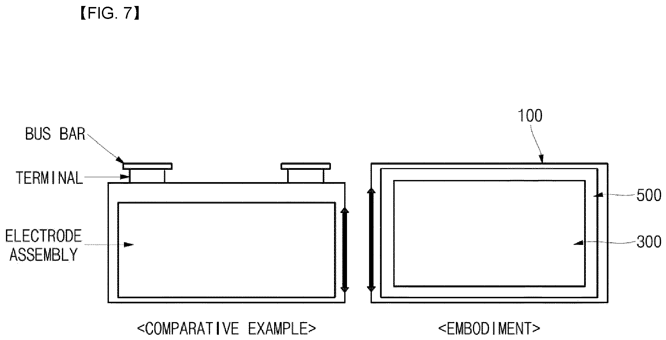

FIG. 7 is a schematic view illustrating a comparison between internal spaces of a secondary battery according to embodiments of the present disclosure and a secondary battery according to a comparative example.

As shown in FIG. 7, because a structure for electrically connecting an electrode assembly and positive and negative electrode terminals is deleted, in the secondary battery according to the present embodiments, a size of the electrode assembly may be increased as compared with a conventional structure. Therefore, because an area of an electrode plate itself is increased, capacity of the secondary battery is increased.

According to embodiments of the present disclosure, because a negative electrode terminal and a positive electrode terminal exposed to the outside of a case can be removed, and because the case can serve as the negative electrode terminal and the positive electrode terminal, the structure and parts of a secondary battery can be simplified. In one or more embodiments, because a current path can be provided through the case, a separate bus bar is not required. Accordingly, material and processing costs can be reduced, and an internal space of the secondary battery can be increased, thereby increasing capacity and improving energy density.

While the foregoing embodiments are only embodiments for carrying out the present disclosure, which is not limited to the embodiments, it will be understood by a person skilled in the art that various changes in form and details may be made therein without departing from the scope of the present disclosure as defined by the following claims, with functional equivalents thereof to be included therein.

## Claims

1. A secondary battery (10) comprising:
a first case (100, 100') having a hexahedral shape;
a second case (200) having a hexahedral shape, and coupled to the first case (100, 100');
an electrode assembly (300) in the first case (100, 100') and the second case (200);
a pair of current collector plates (400) electrically connected to the electrode assembly (300), and electrically connected to the first case (100, 100') and the second case (200), respectively; and
a sealing member (500) comprising an insulating material between the first case (100, 100') and the second case (200).

2. The secondary battery (10) as claimed in claim 1, wherein one of the first case (100, 100') and the second case (200) is larger than the other, and is coupled thereto to overlap a portion thereof; and
wherein the sealing member (500) surrounds a portion where the first case (100, 100') and the second case (200) overlap.

3. The secondary battery (10) as claimed in claim 2, wherein the one of the first case (100, 100') and the second case (200) comprises a vent region (122) adjacent to a portion where of the other overlaps;
wherein the vent region (122) is in a short side portion (130, 230) or in a long side portion (120, 220) of the one of the first case (100, 100') and the second case (200); and
wherein the vent region (122) has a thickness that is less than a thickness of the short side portion (130, 230) or the long side portion (120, 220).

4. The secondary battery (10) as claimed in claim 2, further comprising a vent (126) at a vent hole (124) that is defined in the one of the first case (100, 100') and the second case (200).

5. The secondary battery (10) as claimed in claim 4, wherein one of the pair of current collector plates (400) is adjacent to a long side portion (120, 220) or a short side portion (130, 230) of the first case or the second case away from the vent (126).

6. The secondary battery (10) according to one of the preceding claims, wherein the electrode assembly (300) has a hexahedral shape, and
wherein the pair of current collector plates (400) are respectively at end portions of the electrode assembly (300) in a length direction or in a direction perpendicular to the length direction.

7. The secondary battery (10) as claimed in one of claims 5 or 6, wherein the pair of current collector plates (400) have a plate shape, and comprise a bent portion (410) that is bent toward the long side portion (120, 220) or the short side portion (130, 230) adjacent thereto, respectively.

8. The secondary battery (10) as claimed in one of claims 2 to 7, wherein the sealing member (500) has a width that is greater than a width of the portion where the first case (100, 100') and the second case (200) overlap.

9. The secondary battery (10) according to one of the preceding claims, wherein the sealing member (500) comprises a sealing gasket.

10. The secondary battery (10) according to one of the preceding claims, wherein the first case (100, 100') comprises a positive electrode case (100, 200) having a positive polarity, and
wherein the second case (200) comprises a negative electrode case (100, 200) having a negative polarity.

11. The secondary battery (10) as claimed in claim 10,
wherein a negative electrode plate (310) is at an outermost side of the electrode assembly (300) to face the first case (100, 100') and the second case (200).

12. The secondary battery (10) as claimed in claim 10 or 11, wherein the electrode assembly (300) comprises a positive electrode plate (320) facing the first case (100, 100'), and a negative electrode plate (310) facing the second case (200).

13. The secondary battery (10) as claimed in claim 12, wherein a surface of the positive electrode plate (320) that faces the first case (100, 100') is not coated with an active material.

14. The secondary battery (10) as claimed in claim 7, wherein the first case (100, 100') comprises a positive electrode case (100, 200) having a positive polarity,
wherein the second case (200) comprises a negative electrode case (100, 200) having a negative polarity,
wherein the bent portion (410) of one of the pair of current collector plates (400) at a positive electrode side electrically connected to a positive electrode plate (320) of the electrode assembly (300) contacts the first case (100, 100'), and
wherein the bent portion (410) of another of the pair of current collector plates (400) at a negative electrode side electrically connected to a negative electrode plate (310) of the electrode assembly (300) contacts the second case (200).

15. The secondary battery (10) as claimed in claim 14, further comprising an insulator (600) comprising an insulating material between the first case (100, 100') and the current collector plate (400), and between the second case (200) and the current collector plate (400).
